# EUROPEAN PATENT SPECIFICATION

(11) **EP 3 118 600 B1**
(45) Date of publication and mention of the grant of the patent: **26.09.2018**
(21) Application number: 15177067.4
(22) Date of filing: 16.07.2015
(51) Int. Cl.: G01L 19/00, B60R 21/0136, G01L 19/06, G01L 5/00

(54) **A VEHICLE SAFETY SYSTEM**
FAHRZEUGSICHERHEITSSYSTEM
SYSTEME DE SECURITE DE VEHICULE

(43) Date of publication of application: 18.01.2017
(73) Proprietor: Autoliv Development AB, 447 83 Vårgårda (SE)
(72) Inventor: Höfelsauer, Herbert, 81667 München (DE)
(74) Representative: Beattie, Alex Thomas Stewart

(56) References cited:
- WO-A1-2015/024562
- JP-A- H09 159 561
- US-A1- 2007 089 520
- US-A1- 2008 041 624
- US-A1- 2010 288 377

## Description

The present invention relates to a vehicle safety system, and in particular concerns a pedestrian protection pressure sensor arrangement.

A pedestrian protection pressure sensor arrangement generally includes a flexible or resilient member, such as a hose, which includes a volume of gas. At one or both ends of the hose, a pressure sensor is mounted, in fluid communication with the volume of gas within the hose.

The hose is positioned so that, if a vehicle is involved in a particular type of accident, a part of the hose will be compressed. For instance, the hose may be arranged within the front or rear bumper of the vehicle, or within a side door of the vehicle.

If the part of the vehicle in which the hose is arranged receives an impact, the hose will be compressed and the pressure of the gas within the hose will increase sharply. This increase in pressure will be detected by the pressure sensor(s), which can generate a signal indicating that the vehicle has received an impact indicative of a certain type of accident. In response to this signal being generated, one or more safety systems may be activated, such as a pedestrian airbag or bonnet lifter.

US8862312 discloses an example of a pedestrian protection pressure sensor arrangement.

WO2015/024562 discloses a pedestrian protection pressure sensor arrangement in which an elastic membrane may deform to provide some allowance for pressure compensation.

US2010/0288377 discloses a pressure compensation unit for use in pressure sensor. The document discloses a pressure compensation unit for use in a pressure sensor includes a housing which has at least one continuous channel, at least one opening being provided in a wall of the channel. The opening is connectable to a reference pressure chamber of the pressure sensor via t least one air passage in the housing. The opening is closed by at least one gas-permeable and preferably fluid-tight filter diaphragm.

It is an object of the present invention to provide an improved system of this type.

Accordingly, one aspect of the present invention provides a vehicle pressure sensing system, comprising: a pressure sensor; a housing defining an internal space which is in fluid communication with the pressure sensor so that the pressure of gas within the internal space can be sensed by the pressure sensor; a first connection arrangement, allowing connection of the sensor to a substantially enclosed and compressible sensing member, so that variations in pressure in the sensing member are communicated to the internal space; and a venting arrangement, allowing gas communication between the internal space and the surrounding atmosphere, wherein the venting arrangement comprises: a passage comprising or leading to an exit port; a filter arrangement having an inner end and an outer end and being positioned within the passage so that it partially occludes the passage, the filter arrangement having at least one flow path formed therein passing from the inner end to the outer end but preventing or substantially preventing the passage of water through the filter arrangement.

Conveniently, the passage is elongate and comprises opposing internal walls, and the filter arrangement is provided between the opposing internal walls.

Preferably, both the inner end and outer end of the filter arrangement are provided between the opposing internal walls.

Advantageously, the filter arrangement comprises a water resistance arrangement, positioned within the passage, that allows the passage of gas therethrough but prevents or substantially prevents the passage of water through the filter arrangement.

Preferably, the water resistance arrangement comprises a quantity of a water resistant and gas permeable material.

Conveniently, the quantity of the water resistant and gas permeable material is provided within the filter element.

Advantageously, the quantity of the water resistant and gas permeable material is provided upstream or downstream of the filter element.

Preferably, the water resistance arrangement comprises a drainage aperture formed in an intermediate portion of the filter element.

Conveniently, the water resistance arrangement comprises two opposing surfaces, wherein the flow path passes between the surfaces, and wherein at least one of the opposing surfaces comprises a micro-structured surface.

Advantageously, the filter arrangement comprises a filter housing and a filter element, wherein the filter element fits within the filter housing.

Preferably, the filter housing is fixed in the passage, and the filter element is removable from the filter housing.

Conveniently: the filter housing has an inner surface; the filter element has an outer surface; in use, the filter element is positioned within the filter housing so that there is a close fit between the inner surface of the filter housing and the outer surface of the filter element; and the flow path comprises a channel formed in the inner surface of the filter housing or in the outer surface of the filter element.

Advantageously, the flow path comprises two or more sections having different cross-sectional areas.

Preferably, the filter arrangement comprises a block of a gas-permeable material, which does not allow the passage of water therethrough.

Advantageously, the block is a unitary block.

Conveniently, the gas-permeable material is a foam material.

Advantageously, the block of the gas-permeable material completely or substantially completely fills the cross-section of the passage.

Preferably, the passage includes one or more shoulder surfaces, and the block of gas-permeable material contacts or bears against the one or more shoulder surfaces to prevent movement of the block along the passage in at least one direction.

Conveniently, the passage includes two spaced-apart shoulder surfaces, and the block extends between the two shoulder surfaces, and contacts or bears against each of the shoulder surfaces, to prevent movement of the block along the passage in either direction.

Advantageously, the block further comprises a quantity of another material.

Preferably, the further material is not gas-permeable.

Conveniently, the further material is more rigid than the gas-permeable material.

Advantageously, the block comprises a core of the other material, surrounded at least partially by the gas-permeable material.

Alternatively, the block comprises a core of the gas-permeable material, surrounded at least partially by the other material.

Alternatively, the block comprises the gas-permeable material and the other material extending side-by-side along all or some of the length of the block.

Another aspect of the present invention provides a vehicle comprising a sensor arrangement according to any of the above, and a substantially enclosed and compressible sensing member attached to the first connection arrangement thereof.

A further aspect of the present invention provides a filter arrangement for use in venting gas from a pressure sensing arrangement in a vehicle, the filter arrangement having an inner end and an outer end and at least one flow path formed therein passing from the inner end to the outer end, and a water resistance arrangement, that allows the passage of gas therethrough but prevents or substantially prevents the passage of water through the filter arrangement, wherein the filter arrangement comprises a filter housing and a filter element which is removable from the filter housing.

Preferably: the filter housing has an inner surface; the filter element has an outer surface; in use, the filter element is positioned within the filter housing so that there is a close fit between the inner surface of the filter housing and the outer surface of the filter element; and the flow path comprises a channel formed in the inner surface of the filter housing or in the outer surface of the filter element.

Another aspect of the invention provides a kit comprising a filter arrangement according to the above, and one or more further filter elements which are interchangeable with the filter element, the or each further filter element having a flow path having a different resistance to air passing therethrough to that of the filter element, and preferably wherein the or each further filter element has a flow path which has a different minimum cross-sectional area than that of the flow path of the filter element.

A further aspect of the present invention provides a method of forming a pressure sensing system, comprising the steps of: providing a housing defining an internal space which is in fluid communication with a pressure sensor so that the pressure of gas within the internal space can be sensed by the pressure sensor; providing a passage comprising or leading to an exit port; introducing a quantity of a liquid into the passage; allowing or causing the liquid to set or cure so that the liquid forms a solid filter which completely or substantially completely fills the cross-section of the passage, wherein the filter has an inner end and an outer end, and is gas-permeable, allowing the flow of gas from the inner end to the outer end, but does not allow the passage of water therethrough.

In order that the invention may be more readily understood embodiments thereof will now be described, way of example, with reference to the accompanying figures, in which:
Figure 1 shows a sensor arrangement embodying the present invention;
Figures 2a, 2b, 3a - 3d and 4 to 8 show filter arrangements embodying the present invention;
Figure 9 shows an alternative sensor arrangement embodying the present invention;
Figure 10 shows a further alternative sensor arrangement embodying the present invention;
Figures 11 and 11b show alternative ways of positioning a filter block within a passage; and
Figures 12 and 13 show alternative filter blocks suitable for use with the present invention.

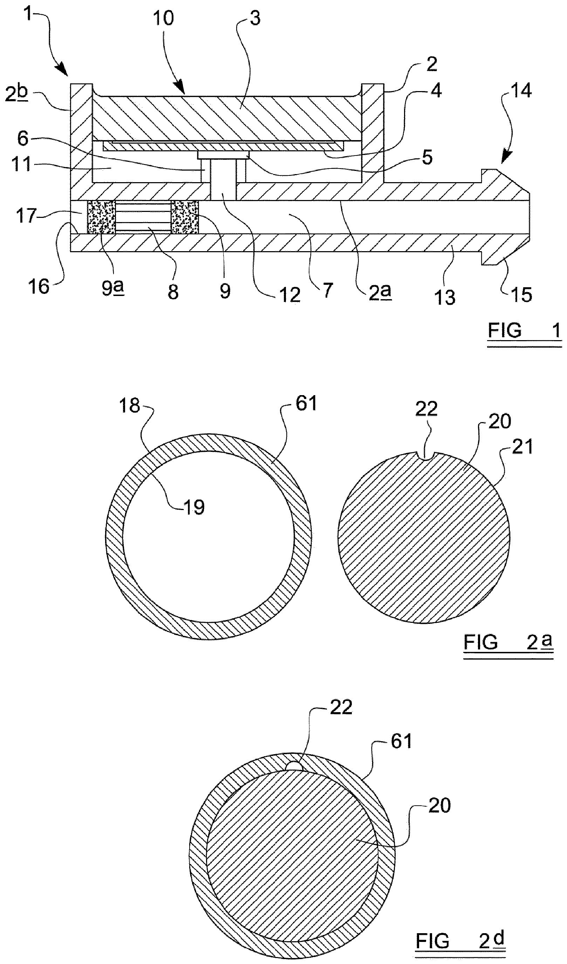

Referring firstly to figure 1, a schematic view of a pedestrian protection pressure sensor arrangement 1 embodying the present invention is shown.

The sensor arrangement 1 includes a main housing 2 which, in the embodiment shown, generally takes the form of an oblong box with one side removed (although the main housing may take any appropriate shape). The main housing 2 has a bottom wall 2a and side walls 2b which are set at approximately right angles to the bottom wall 2a. Opposite the bottom wall 2a is an open side 10.

Positioned within the main housing 2 is a PCB 4, which in the embodiment shown is generally parallel with the bottom wall 2a. The PCB 4 has a pressure sensor 5 mounted thereon, on the side which faces the bottom wall 2a.

A quantity of a potting substance 3, such as a resin, is placed in the open end 10 of the main housing 2, so that the open end 10 is sealed, and preferably the seal is both airtight and watertight. The seal formed by the potting substance 3 creates an internal space 11 within the main housing 2, in which the PCB 4 and the pressure sensor 5 are located.

A delivery aperture 12 is formed through the bottom wall 2a of the main housing 2. A gasket 6 is positioned between the delivery aperture 12 and the pressure sensor 5, and forms a gas-tight or substantially gas-tight passage between the delivery aperture 12 and the pressure sensor 5. This passage prevents fluid communication between the delivery aperture 12 and the remainder of the sealed space 11 (i.e. the space outside the gasket 6) within the main housing 2.

The pressure sensor 5 is arranged so that the pressure of the air that passes through the delivery aperture 12 and the gasket 6 is sensed by the pressure sensor 5. The PCB 4 also includes, or is connected to, components which are at least able to transmit a signal to other components within the vehicle, such as an on-board vehicle processor (not shown).

In some embodiments, the components on the PCB 4 may be arranged so that signals encoding or representing the sensed pressure may be transmitted. In other embodiments, components located on the PCB may perform some processing on the sensed pressure, and signals representing the result of this processing maybe transmitted.

The sensor arrangement 1 also includes a connection arrangement which, in the embodiment shown, takes the form of a generally tubular pipe 13 enclosing a central gas channel 7. The connection arrangement is attached to the main housing 2 so that the delivery aperture 12 of the main housing 2 is in fluid communication with the gas channel 7 formed within the connection arrangement. In the embodiment shown, the pipe 13 is connected to (or formed integrally with) the main housing 2 so that the bottom wall 2a of the main housing 2 joins one part of the wall of the pipe 13. However, in other embodiments the connection arrangement may be formed differently.

At a free end 14 of the pipe 13, a flanged connector 15 is formed to allow the connection arrangement to be connected to a hose (not shown). In use of the sensor arrangement 1, the connection arrangement will be connected to a hose which may, as described above, be deformed during an impact.

The skilled reader will therefore appreciate that the sensor arrangement 1 has an internal volume including the gas channel 7 and the volumes within the delivery aperture 12 and gasket 6, which are in fluid communication with the interior of the hose. When an impact occurs, the pressure within the hose will rise sharply, and this increase in pressure will be communicated rapidly through the gas channel 7, the delivery aperture 12 and the gasket 6 to the pressure sensor 5, which will sense the increase in pressure. The sensed increase in pressure can then be processed (for instance, by being compared with one or more thresholds) and a signal can be generated (by components on or remote from the PCB 4) indicating that the vehicle is involved in an impact. One or more safety systems can be activated in response to this signal.

The sensor arrangement 1 also comprises a passage 17 which allows gas communication between the internal volume of the sensor arrangement (which, as described above, includes the gas channel 7 and the volumes within the delivery aperture 12 and gasket 6) and the surrounding atmosphere. In the depicted embodiment, the pipe 13 of the connection arrangement continues on beyond the delivery aperture 12 and forms the passage 17, but the skilled reader will appreciate that many other different configurations are possible.

The passage 17 has an open end 16 which is in direct or indirect communication with the atmosphere. Preferably, at least a part of the passage 17 has a circular or substantially circular internal cross-sectional shape.

A filter arrangement 8 is positioned in the passage 17, at a location between the delivery aperture 12 and the open end 16 of the passage 17. It will therefore be understood that, for gas to pass from the enclosed internal volume which is in fluid communication with the pressure sensor 5, to the surrounding atmosphere, it must pass through the filter arrangement 8. The filter arrangement 8 is described in greater detail below.

In the embodiment shown, the filter arrangement 8 includes a water resistant member 9 which is positioned within the passage 17, on the internal side of the filter arrangement 8, i.e. on the side facing the enclosed volume of gas within the sensor arrangement 1.

Reference numeral 9a shows an alternative position for the water resistant member, which is on the external side of the filter arrangement 8 i.e. on the side facing the surrounding atmosphere.

In general, the filter arrangement 8 allows some gas to pass therethrough to provide some equalisation of pressure between the enclosed volume of gas within the sensor arrangement 1 and the surrounding atmosphere. One reason for this is that, when the temperature in or around the enclosed volume of gas within the sensor arrangement 1 is high, the pressure of gas within this enclosed volume could reach a very high level if the volume was completely enclosed and no communication was allowed with the surrounding atmosphere. High pressure of this kind may cause the pressure sensor to malfunction. For instance, a system of this type may use the Infineon KP 200 pressure sensor. This sensor has defined limits for "plausibility", i.e. a range of temperatures which should be detected during normal use in the absence of an impact situation. The current upper limit for plausibility for this sensor is 110 kPa. If the sensor arrangement is exposed to high temperatures, and if no venting is allowed, then the pressure within the enclosed volume may exceed 110 kPa, which would lead to the production of an error signal. Under such circumstances the pressure sensor may function unreliably, or may not function at all.

The skilled reader will appreciate, of course, that excessive venting between the enclosed volume within the sensor arrangement 1 and the external atmosphere will compromise the ability of the sensor arrangement 1 to detect rises of pressure within the enclosed volume, which is crucial for the correct functioning of the sensor arrangement 1. The filter arrangement 8 therefore should allow pressure equalisation at a slow rate, whilst not significantly adversely affecting the performance of the sensor arrangement 1 during an impact situation.

In preferred embodiments of the invention, during a typical impact situation the pressure within the enclosed volume would (if no venting was provided) increase by a given amount above a base pressure, which is the pressure in the absence of an impact event, and the inclusion of the venting arrangement including the filter element 8 should reduce the amount of this increase above the base pressure by no more than 5%. If necessary, the sensitivity of the system to pressure rises may need to be increased to compensate for the venting. For instance, the sensed pressure change may be compared against a lower threshold to determine that an impact is occurring.

Turning to figure 2a, one possible arrangement for a filter arrangement is shown. On the left of figure 2a is a cross-sectional view of a filter housing 61, which takes the form of a circular tube having an outer wall 18 and an inner wall 19. On the right of figure 2 is a filter element 20, which takes the form of a substantially solid cylinder having an outer wall 21 with a diameter which is approximately the same as, or slightly less than, the diameter of the inner wall 19 of the filter housing 61. The diameters and materials are chosen so that the filter element 20 may be placed within the filter housing 13 so that a substantially airtight seal is formed between the outer wall 21 of the filter element 20 and the inner wall 19 of the filter housing 61.

The filter element 20 has a channel 22 which takes the form of a trough formed in its outer surface extending along the entire length of the filter element 20 (in figure 2a, the length of the filter element 20 is perpendicular to the plane of the paper). In the embodiment shown the channel 22 is substantially semi-circular in cross-section, but it will be understood that the channel may have any suitable cross-sectional shape.

In preferred embodiments the cross-sectional shape of the channel is constant along the length of the filter element 20. This will aid the smooth flow of gas along the channel 22. However, in other embodiments the cross-sectional shape and/or area may vary along the length of the filter element 20.

In preferred embodiments of the invention the filter housing and filter element are formed from a robust material, such as a strong plastics material. While more deformable material may be used, since the filter housing and filter element may be required to maintain their shape and integrity when exposed to very high pressure, it is preferred not to use such deformable materials.

The skilled reader will also appreciate that after installation of the filter arrangement, it may be many years before the vehicle is involved in an impact requiring activation of a pedestrian protection system. It is therefore advantageous to use a material such as a strong plastics material, which may be relied upon to retain its shape and integrity over a long period time, particularly if the filter arrangement has some exposure to the elements (see below).

Figure 2b shows an alternative embodiment, in which the channel 22 is formed in the inner surface 19 of the filter housing 61, and the filter element 20 comprises a cylinder without any channels formed in its outer surface.

In some embodiments (discussed in more detail below), two or more channels may be formed. It should be understood that all of the channels may be formed in the filter element, or all of the channels may be formed in the filter housing, or that one or more channels may be formed in the filter element and one or more channels may be formed in the filter housing.

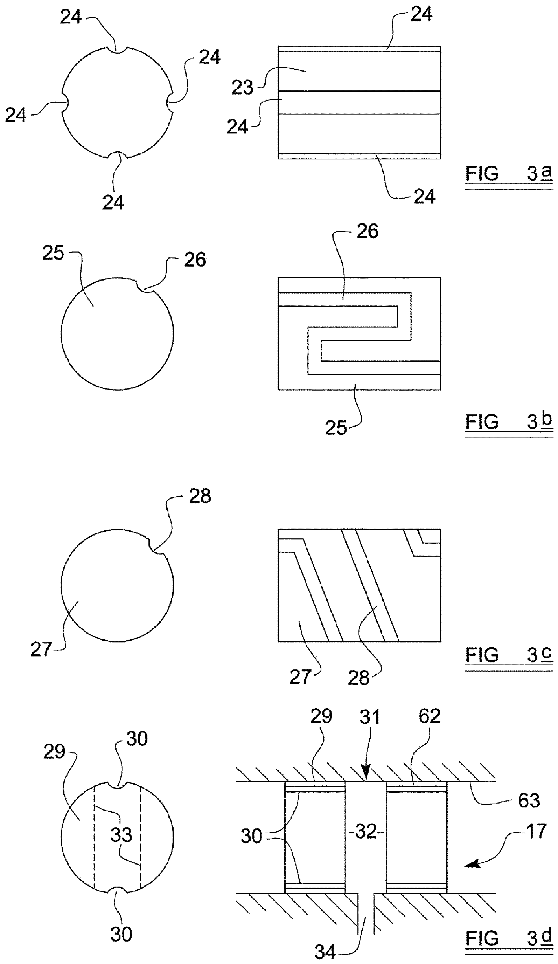

Figures 3a to 3b show various alternative filter elements which may be used with the present invention. In each of figures 3a to 3c, only the filter element is shown, and the filter housing is not, but it is envisaged that each of the filter elements may be used in conjunction with a filter housing as described above.

Figure 3a shows a filter element 23 having four channels 24 formed along its outer surface. The channels 24 are evenly spaced around the circumference of the filter element 23, although in other embodiments this need not be the case.

It will be appreciated that, compared to the filter element 20 shown in figure 2, this filter element 23 allows a greater rate of venting, since four parallel channels 24 are provided.

In figures 2a, 2b and 3a the channels that are formed are substantially straight. Figure 3b shows a further filter element 25 which has a single channel 26 formed on its outer surface. However, this channel 26 is labyrinthine, extending part way along the length of the filter element 25 before doubling back on itself, and finally doubling back on itself again and continuing to the far end of the filter element 25. Any other kind of labyrinthine channel may also be used.

Turning to figure 3c, a further filter element 27 is shown, which includes a single channel 28 formed on its outer surface. The channel 28 has short, generally straight sections at each end of the filter element 27, but describes a spiral around the circumference of the filter element 27 for the majority of its length.

The skilled reader will appreciate that the embodiments shown in figures 3b and 3c aim to increase the path length of the channel 26, 28, i.e. the length for which gas must flow through the channel 26, 28 to pass from one side of the filter element 25, 27 to the other.

The skilled reader will understand that are many different configurations of channel that may give rise to this result, and the invention is not limited to the embodiments shown.

It will also be understood that two, three, four or more such channels may be provided on the exterior of a filter element. Indeed, where a plurality of channels is formed on a filter element, it is not necessary for all of the channels to have the same configuration. For instance, a filter element may include one generally straight channel as shown in figure 2, and one labyrinthine channel as shown in figure 3b.

Figure 3d shows a further filter element 29 which has two channels 30 formed in its periphery. In this embodiment the channels are substantially straight, for instance, as shown in figure 2 and figure 3a, although this need not be the case. The filter housing 62 is also shown in figure 3d.

This filter element 29 has a central section 31 comprising a cavity 32 within the filter element 29. The dotted lines 33 in the end-on view in figure 3d show the extent of the cavity, and it will be understood that the cavity 32 is formed between these dotted lines 33.

Importantly, the channels 30 are interrupted by the cavity 32. Therefore, air flowing from one end of the filter element 29 to the other flows through a first section of one of the channels 30, formed on one side of the cavity 32, into the cavity 32, and then through a second section of one of the channels 30, which is formed on the other side of the cavity 32.

Where the filter element 29 is installed in the connection housing 13, an aperture 34 is formed in the wall 63 of the passage 17, aligned with, and in fluid communication, with the cavity 32. A corresponding aperture is formed in the filter housing 62.

This arrangement prevents water and other liquids from passing through the filter element 29 from an exterior side of the filter element 29 to the interior side. Any liquid which enters either of the channels 30 from the exterior side will enter the cavity 32, and will exit the cavity through the aperture 34 (for this reason, it is preferred that the aperture 34 is formed on the bottom side of the passage 17, so that liquid is drawn into the aperture 34 by the influence of gravity).

In preferred embodiments the aperture 34 leads to a water collection vessel (not shown), so that the presence of the aperture 34 does not compromise the pressure characteristics of the system. It will be understood that the shape of the channels used in the embodiment shown in figure 3d need not be as shown, and any of the types of channel shown or discussed herein may be used with a central cavity as shown in figure 3d.

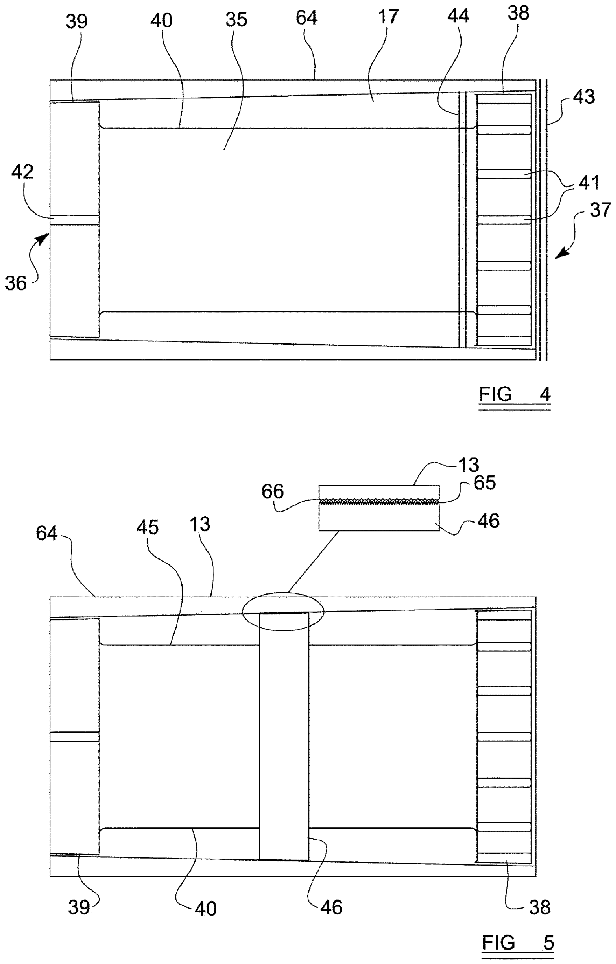

As discussed above, it is desirable to have a water resistant member, that allows the passage of gas therethrough, positioned within the passage 17. Figures 4 to 8 show various arrangements showing how this may be achieved. Turning closely to figure 4, a filter element 35 is shown, positioned within a generally cylindrical filter housing 64, as discussed above.

In the arrangement shown in figure 4, the internal diameter of the filter housing 64 tapers towards to the exterior end (i.e. the left-hand side as shown in figure 4). The external shape of the filter element 35 is formed to match the internal shape of the filter housing 64, i.e. the outer end 36 of the filter element 35 is narrower than the inner end 37 thereof.

This means that the filter element 35 cannot be removed from the outer end of the filter housing 64. This design also ensures that, if the filter element 35 experiences very high pressure from its internal side (e.g. in the event of a severe impact), the effect of this will be to drive the filter element 35 more firmly into engagement with the filter housing 64.

As an alternative to this, the filter element 35 and interior wall of the filter housing 64 may have corresponding stepped diameters, or they may be a mounting chamfer, as the skilled person will understand. It should be understood that these techniques are not restricted to the example shown in figure 4, and may be used with any of the filter elements discussed in this application.

Returning to figure 4, the filter element 35 comprises an inner widened portion 38, which is presented on the inner end of the filter element 35 and fits snugly against the interior wall of the filter housing 64.

Similarly, at its outer end, the filter element 35 has an outer widened portion 39, which once again fits snugly against the interior wall of the filter housing 64.

The inner and outer widening portions 38, 39 therefore generally take the form of discs.

In between the inner and outer widened portions 38, 39 there is a narrower bridging portion 40, which takes the form of a generally solid tube having a diameter which is less than that of the internal diameter of the filter housing 64. An empty space which is generally annular (in cross-section) is therefore formed around the bridging portion 40. Overall, the filter element 35 resembles a dumbbell.

The inner widened portion 38 has a plurality of channels 41 formed therethrough, as discussed above. These channels are formed at the periphery of the inner widened portion 38, and it will therefore be understood that the channels 41 are all in fluid communication with the annular space around the bridging portion 40.

The outer widened portion 39 has (in this embodiment) a single channel 42 formed therethrough. It will therefore be understood that air venting from the inner side of the filter element 35 to the outer side may pass through the channels 41 formed in the inner widened portion 38, through the annular space around the bridging portion 40, and then through the single channel 42 formed in the inner widened portion 39.

In this embodiment, the single channel 42 formed in the outer widened portion 39 acts as the flow limiter for the filter arrangement. The combined cross-sectional areas of the channels 41 formed in the inner widened portion 38 is significantly larger than the cross-sectional area of the single channel 42 formed in the outer widened portion 39.

One advantage of this approach is that the venting rate of the filter arrangement will generally need to be carefully controlled, and so the single channel 42 formed in the outer widened portion 39 must be accurately machined to allow the desired venting flow rate. If this is done, the areas of the channels 41 formed in the inner widened portion 38 need not be formed with such precision.

A gas-permeable membrane 43 is also provided, directly adjacent or near the inner end of the filter element 35. The gas-permeable membrane 43 is therefore provided upstream of the filter element 35.

In the embodiment shown, the gas-permeable membrane 43 is formed across the inner end of the filter housing 64, so that it completely or substantially completely occludes the opening at the inner end of the filter housing, with the result that water or other liquids which pass through the filter element 35 cannot pass through the gas-permeable membrane 43 and enter into the sealed volume within the sensor arrangement 1.

As discussed above, as an alternative to this, the gas-permeable membrane 43 could be formed across the outer end of the filter housing 64.

In figure 4 an alternative location 44 is also shown for the gas-permeable membrane, which is within the filter element 35, and around the bridging portion 40. In the embodiment shown, the gas-permeable membrane is near the rear side of the inner enlarged portion 38, although this may not be the case.

It will be understood that, if the gas-permeable membrane is provided in alternative location, the membrane will take a generally annular form to extend around the bridging portion 40 and fill the gap therearound. More generally, the membrane may be provided within the filter element, and shaped to fill the gap(s) within the filter element at the longitudinal location at which the membrane is placed.

Turning to figure 5, a further filter element 45 is shown (again within a filter housing 64), which is similar to the filter element 35 shown in figure 4, in that it has inner and outer enlarged portions 38, 39 with a narrower bridging portion 40 extending therebetween.

In this embodiment, an annular rib 46 protrudes outwardly from the bridging portion 40, extending all of the way around its circumference. In the embodiment shown the rib 46 protrudes from a generally central region of the bridging portion 40, although this may not be the case.

At its circumference, the rib 46 lies close to, but does not touch, the inner wall of the filter housing 64 around at least a portion of its circumference. A close-up view of the interface between the periphery of the rib 46 and the filter housing 64 is shown. A micro-structured surface is provided on one or both of these opposing surfaces, which may include ribs, teeth, castellations or the like which extend towards the other of the opposing surfaces. The height of the features making up the micro-structured surface may be around 1-10µm, although the features may be larger or smaller than this if required. In the embodiment shown, relatively small, closely-spaced ridges 65 are formed on the outer surface of the rib 46, extending towards the filter housing 64. Longer ridges 66 are formed on the inner surface of the filter housing 64, facing towards the periphery of the rib 46.

The effect of this is to produce an irregular, labyrinthine passage between the outer periphery of the rib 46 and the inner surface of the filter housing 64.

The result will be that it will be difficult or impossible for liquid such as water which passes through the inner enlarged portion 38 to pass the rib 46. Gas passing through the filter element 45 will be able to pass with relative ease around the periphery of the rib 46, however, and therefore will not be substantially impeded.

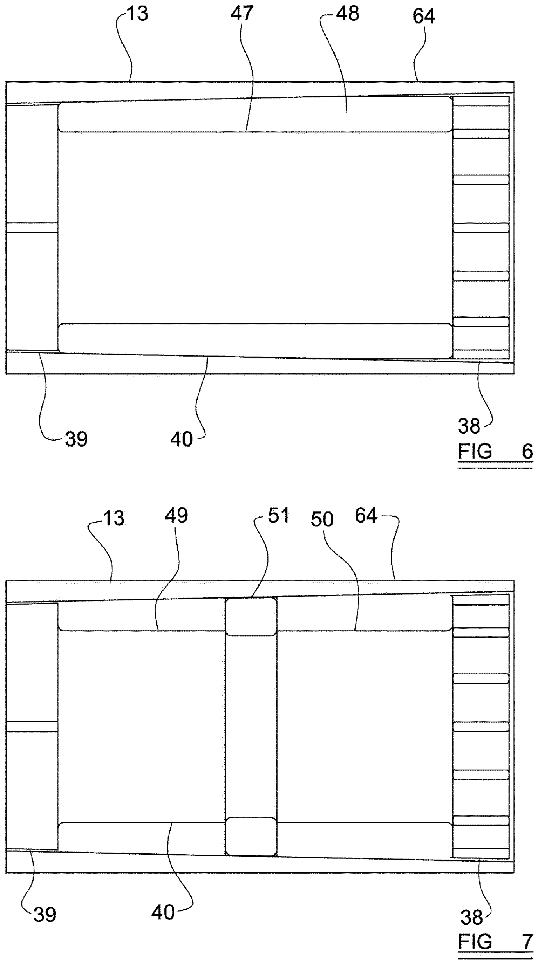

Turning to figure 6, a further filter element 47 is shown. This filter element is generally identical to the filter element 35 shown in figure 4.

In the annular cavity around the bridging portion 40, a hollow, tubular gas-permeable element 48 is provided. This gas-permeable element 48 is generally the same shape and size as, and substantially entirely fills, the space between the bridging portion 40 and the inner surface of the filter housing 64.

The gas-permeable element 48 is preferable formed from a foam or similar material having a relatively open structure allowing gas to pass therethrough, but through which liquid such as water may not pass. The presence of the gas-permeable element 48 therefore makes the filter element 47 effectively fluid-tight.

The gas-permeable element 48 may be formed as a sleeve having a cut or break along its length. This sleeve can therefore be opened up to be fitted around the bridging portion 40 before the filter element 47 is inserted into the filter housing 64. The gas-permeable element 48 may, in its relaxed state (i.e. with no significant external forces acting on it) be larger than the space within the filter arrangement which it occupies. This ensures that the gas-permeable element 48 is under compression and fills the space completely or substantially completely.

Another filter element 49 is shown in figure 7. This filter element 49 is similar to that shown in figure 4, although this filter element 49 includes a groove 50 formed around the circumference of a part of the bridging portion 40.

A gas-permeable element 51 taking the form of a ring passes around the bridging portion 40. On its inner side the gas-permeable element 51 fits into the groove 50, extending outwardly to contact the inner surface of the filter housing 64.

The fact that the ring of gas-permeable material 51 is positioned within the groove 50 formed in the bridging portion 40 of the filter element 49 prevents the ring from moving out of its position, particularly if exposed to highly pressurised air on its inner side.

Once again, in its "rest" state the ring may have a height which is greater than the distance from the bottom of the groove 50 to the inner wall of the filter housing 64.

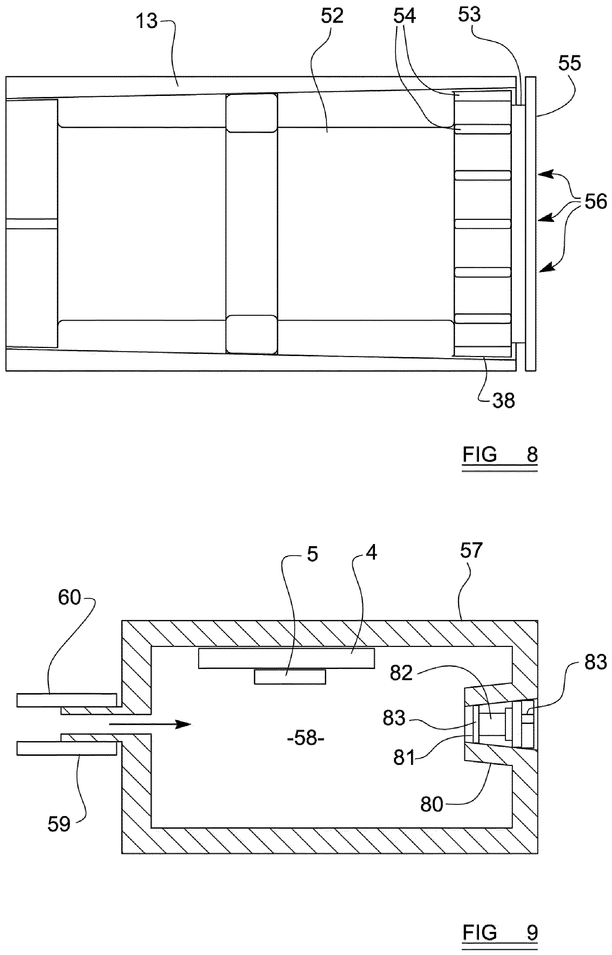

Turning to figure 8, a further filter element 52 is shown. This filter element is similar to the filter element 49 shown in figure 7.

However, protruding from the inner end of the filter element 52 is a supporting protrusion 53, which is generally coaxial with the filter element 52 and has a diameter sufficiently small that it does not occlude the channels 54 formed in the inner enlarged portion 38. The supporting protrusion 53 is relatively short and is attached at its distal end to a shield element 55, which is generally circular and has a diameter which is greater than that of the inner enlarged portion 38.

The shield element 55 prevents liquid such as water from entering the channels 54 formed in the inner enlarged portion 38. For instance, the interior of the sensor arrangement 1 may receive a steam clean, with jets of steam being indicated by reference numeral 56 in figure 8. These jets of steam 56 will be deflected from the shield element 55. However, air from within the sealed volume within the sensor arrangement 1 will be able to pass around the edges of the shield element 55 and hence pass through the filter element 52.

In all of the embodiments described above, the filter arrangement is placed within a passage which connects the sealed volume within the sensor arrangement 1 with the surrounding atmosphere. This passage is, however, separate from the passage which leads from the hose to the pressure sensor.

Figure 9 shows an alternative, simpler arrangement, having a housing 57 defining an interior chamber 58. In the embodiment shown in figure 9, the interior chamber 58 is generally rectangular in cross-section, although it may be any suitable shape. An inlet passage 59 is defined in one wall of the housing 57. As above, a flexible hose 60 is attached to the inlet passage 59, so that changes in pressure in the hose 60 will be communicated to the interior chamber 58.

Within the interior chamber 58 a PCB 4 is positioned, with a pressure sensor 5 mounted on the PCB 4 and arranged to sense the air pressure within the interior chamber 58.

The housing 57 also has an exit passage 80 formed therein. In the embodiment shown, the exit passage 80 projects into the interior chamber 58, but in other embodiments the exit passage may project outwardly. The exit passage 80 is, in this example, formed in the opposite wall to the one on which the inlet passage 59 is defined, but the exit passage 80 may be formed in any suitable location, and may be on the same wall as the one in which the inlet passage 59 is defined.

The arrangement shown in figure 9 has the advantages of being additionally simple and compact, and allowing control over the relative orientations of the inlet and outlet passages 59, 80.

The arrangement shown in figure 9 includes a filter element 81 which has a generally cylindrical main body 82, with wider end collars 83 and an intermediate rib 84 protruding from the main body 82 at a point between the end collars 83. An annular or substantially annular block 85 of a gas-permeable but water resistant foam is positioned between the intermediate rib 84 and the outer end collar 83 (although in other embodiments the block 85 may be positioned between the intermediate rib 84 and the inner end collar 83).

In the embodiments described above, filter arrangements are provided which comprise a filter element provided within a filter housing. One advantage of this is that the filter element can be removed from the filter housing. This will allow the filter element to be cleaned, maintained, inspected and/or replaced with relative ease.

It is also envisaged that the filter arrangement can be modified by removing one filter element from the filter housing and replacing it with a different filter element. This may be necessary if, for instance, a smaller or greater rate of venting is desired.

In addition to this, the filter housing may be produced as a standard component, with different filter elements being produced that fit within the filter housing. Several different types of filter arrangements can therefore be manufactured in a simple and modular manner.

It is envisaged that the filter housing may be fixed in place in the sensor arrangement by welding, or any other suitable means. Alternatively or in addition, the filter housing and the appropriate passage within the sensor housing may have corresponding stepped, tapered and/or chamfered profiles to allow the filter housing to be firmly installed.

In other embodiments of the invention, a filter element may be placed directly within a passage of the sensor arrangement, without being placed within a filter housing. In these embodiments the filter element may be fixed directly in the passage, for instance as described above in relation to the filter housing.

As mentioned above, the size of the apertures/channels through which air is vented should be carefully controlled, so that the filter arrangement performs in the desired manner. Producing a moulded filter element including a narrow, precisely-formed channel is technically difficult, and filter elements produced in this manner may suffer from quality/consistency problems. By contrast, embodiments of the invention comprise a cylindrical or generally cylindrical filter element with one or more channels formed on an outer surface thereof. Channels of this type can be formed (for instance, by a machining operation after moulding of the filter element) in a straightforward manner, having a greater precision and accuracy than is generally achievable in a moulding operation.

In some embodiments, the filter arrangement may comprise two separate elements that fit together and have surfaces that fit together, wherein one or more channels are formed on one or both of the surfaces. For instance, the filter arrangement may comprise two generally semi-cylindrical elements, which can be placed together so that their flat surfaces meet and they form a cylinder. Channels can be formed in one or both of the flat surfaces. The two elements may fit, when placed together, into a filter housing.

In the embodiments shown in figures 4 to 8, the single channel 42 formed in the outer enlarged portion 39 (which as discussed above, may be the flow limiter of the filter arrangement) may have a diameter of around 0.3mm. The skilled reader will appreciate, however, that the cross-sectional area of a channel formed in filter arrangement embodying the invention may be smaller or greater than that of this channel, depending on (for example) the length of the channel, the number of parallel channels that are formed, the kind of vehicle with which the filter arrangement is to be used, and the type of impact that the sensor arrangement is intended to detect.

In the examples described above, the filter arrangement is cylindrical or substantially cylindrical, and this is the preferred configuration. However, other shapes may be employed, and the invention is not limited to this configuration. For instance, a filter arrangement embodying the invention may have a square cross-section, if is required to fit within a square passage. In this case the filter arrangement may have a square cross-section filter housing accommodating a generally cylindrical filter element, or indeed both the filter housing and the filter element may have square cross-sections.

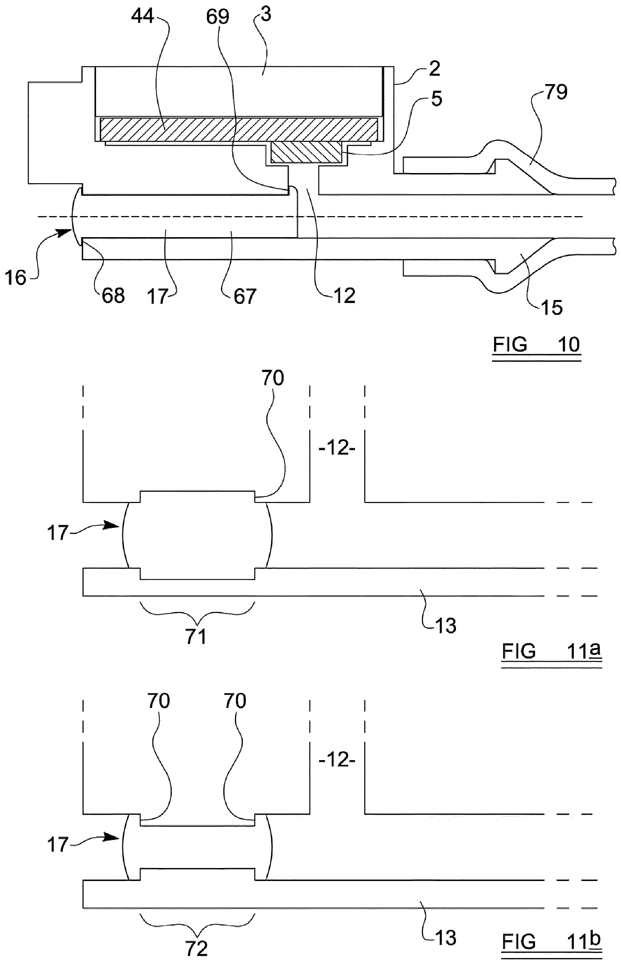

With reference to figure 10, a further embodiment is shown in which the filter arrangement comprises a unitary block 67of a gas-permeable foam material, which fills the entire cross-sectional area of the passage 17. A unitary foam block of this kind will allow gas to pass through at a relatively slow rate, and will therefore allow (as discussed above) pressure equalisation over fairly long timescales, but will not significantly affect the operation of the sensor arrangements in a crash situation.

A unitary block 67 of this kind has the advantage of simple construction. Furthermore, it is likely that no separate water-resistance arrangement will be needed. A suitable foam material can be used which is sufficiently porous to allow air to pass therethrough, but which is not porous enough for water to pass through.

As can be seen in figure 10, at the open end 16 of the passage 17, there is an outward-facing shoulder 68. In this embodiment, the block 67 of foam material extends by a short distance out of the open end 16, and splays outwards so that it is wider than the open end 16, and rests against the outward-facing shoulder 68.

Similarly, where the passage 17 meets the delivery aperture 12, there is an inward-facing shoulder 69. Once again, the block 67 extends beyond this shoulder 69, and splays outwardly so that it is wider than the passage 17, and rests against the inward-facing shoulder 69.

The block 67 is therefore held in place in the passage 17, and without being broken it cannot be pushed outwardly (because of the inward-facing shoulder 69) or inwardly (because of the outward-facing shoulder 68).

In this example, the shoulders 68, 69 are formed by the open end 16 of the passage 17, and by the junction of the passage 17 with the delivery aperture 12. However, shoulders can be formed in any other suitable way. For instance, as shown in figures 11 a and 11b, shoulders 70 can be formed within the passage, by providing a relatively narrow section 71 in which the block is positioned (as in figure 11a) or a relatively wide section 72 in which the block is positioned (as in figure 11b). Indeed, it is envisaged that, instead of sharp shoulder surfaces of this type, the passage 17 may be formed to have any other shape that prevents or hinders removal of the block, for instance a bulge or constriction (which may have smoothly curved walls) positioned in a central region of the passage 17.

The block 67 may be formed to have an appropriate shape, and then positioned in the sensor arrangement. Some deformation of the block 67 may be needed in order to put the block 67 in position.

Alternatively, the block 67 may be formed in the sensor arrangement, for instance by introducing the foam in a liquid form, so that the foam flows around the relevant components before setting. The foam may need to be set or cured in place by means of, for example, heat, UV radiation or one or setting chemicals. In these embodiments, a very good fit between the foam block 67 and the surrounding components can be created, particularly since the foam may expand as it sets.

The hose 79, which is arranged so as to be compressed during a crash event, is shown in figure 10.

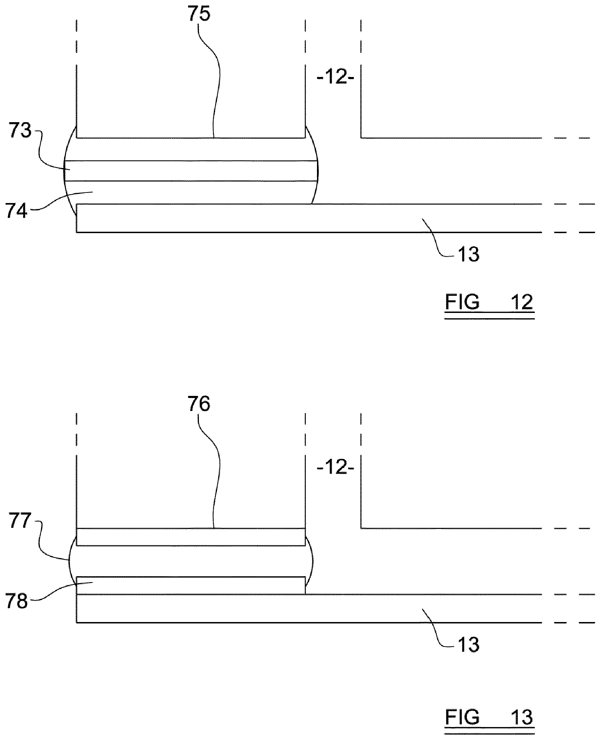

Instead of a unitary block of foam, a composite block 75 may be provided. For instance, the block may have a core 73 of a more rigid material (which is preferably not or substantially not gas-permeable), such as a plastics material, surrounded by a gas-permeable foam 74, as shown in figure 12. The core 73 may extend all of the way through the block 75, as shown in figure 12. Alternatively, the core may extend only part of the way through the block. In the embodiment shown in figure 12, the core 73 has a constant width and cross-sectional shape (i.e. substantially cylindrical) along the length of the block 75. However, the width and/or cross-sectional shape of the core may change along the length of the block.

In yet further embodiments, for instance as shown in figure 13, the block 76 may have a core 77 of gas-permeable foam, surrounded by a more rigid material 78.

In still further embodiments, the gas-permeable foam and the more rigid material extend side-by-side along all or some of the length of the block. For instance, if the passage 17 is cylindrical in shape, the block may be formed as a half-cylinder of gas-permeable foam, bonded or attached to a half-cylinder of the more rigid material. It is expected that embodiments like this will be relatively easy to form, and the more rigid material will provide support along the length of the block.

It will be understood that, where the block comprises both gas-permeable foam and a more rigid material, the gas-permeable foam may (as described above) be formed within the sensor arrangement, by (for instance) being introduced into or around the more rigid material before setting/curing in place.

In embodiments where the block includes both gas-permeable foam and a more rigid material, the strength and/or rigidity of the block can be improved. The cross-sectional area of gas-permeable foam can also be controlled, and the rate at which gas will pass through the block can be varied in this way.

It is expected that embodiments such as shown in figures 10 to 13, which include a block which is completely or partially formed from a gas-permeable foam, will have a lower gas permeability than other embodiments where open gas passages are formed through the filter arrangement (this will also be true of the embodiments shown in figures 6, 7 and 8, although possibly to a lesser extent). In embodiments where open gas passages are formed through the filter arrangement, an additional flow limiting arrangement (not shown) may be needed within the housing of the sensor arrangement, However, in embodiments which include a block which is completely or partially formed from a gas-permeable foam, it is expected that no such additional flow limiting arrangement will be needed, and the design of the sensor arrangement may therefore be simplified.

The skilled reader will appreciate that embodiments of the invention may provide simple and reliable sensor arrangements. The performance of the sensor arrangements will not be adversely affected by long-term changes in pressure within the sensor arrangement, for instance arising from high temperatures.

When used in this specification and claims, the terms "comprises" and "comprising" and variations thereof mean that the specified features, steps or integers are included. The terms are not to be interpreted to exclude the presence of other features, steps or components.

## Claims

1. A vehicle pressure sensing system, comprising:
a pressure sensor (5);
a housing (2) defining an internal space which is in fluid communication with the pressure sensor so that the pressure of gas within the internal space can be sensed by the pressure sensor;
a first connection arrangement (15), allowing connection of the sensor to a substantially enclosed and compressible sensing member, so that variations in pressure in the sensing member are communicated to the internal space; and
a venting arrangement, allowing gas communication between the internal space and the surrounding atmosphere,
wherein the venting arrangement comprises:
a passage (17)comprising or leading to an exit port (16);
a filter arrangement (8) having an inner end and an outer end and being positioned within the passage so that it partially occludes the passage, the filter arrangement having at least one flow path formed therein passing from the inner end to the outer end but preventing or substantially preventing the passage of water through the filter arrangement and a filter housing and a filter element (8, 20, 23, 25, 27, 29, 35,45,47,49,52,81) wherein the filter element fits within the filter housing wherein the filter housing;
the filter element has an inner surface (19);
the filter element has an outer surface (18);
in use, the filter element is positioned within the filter housing so that there is a close fit between the inner surface of the filter housing and the outer surface of the filter element; and
the flow path comprises a channel (22, 24, 26, 28, 30,41) formed in the inner surface of the filter housing or in the outer surface of the filter element.

2. A pressure sensing system according to claim 1, wherein the filter arrangement comprises a water resistance arrangement, positioned within the passage, that allows the passage of gas therethrough but prevents or substantially prevents the passage of water through the filter arrangement.

3. A pressure sensing system according to claim 2, wherein the water resistance arrangement comprises a quantity of a water resistant and gas permeable material.

4. A pressure sensing system according to claim 3, wherein the quantity of the water resistant and gas permeable material is provided within the filter element, or wherein the quantity of the water resistant and gas permeable material is provided upstream or downstream of the filter element.

5. A pressure sensing system according to claim 2, wherein the water resistance arrangement comprises a drainage aperture formed in an intermediate portion of the filter element.

6. A pressure sensing system according to claim 2, wherein the water resistance arrangement comprises two opposing surfaces, wherein the flow path passes between the surfaces, and wherein at least one of the opposing surfaces comprises a micro-structured surface.

7. A pressure sensing system according to claim 1 or 2, wherein the filter housing is fixed in the passage, and the filter element is removable from the filter housing.

8. A pressure sensing system according to any preceding claim, wherein the flow path comprises two or more sections having different cross-sectional areas.

9. A pressure sensing system according to claim 1, wherein the filter arrangement comprises a block of a gas-permeable material, which does not allow the passage of water therethrough.

10. A vehicle comprising a pressure sensing system according to any preceding claim, and a substantially enclosed and compressible sensing member attached to the first connection arrangement thereof.

11. A filter arrangement (8) for use in venting gas from a pressure sensing system in a vehicle, the filter arrangement having an inner end and an outer end and at least one flow path formed therein passing from the inner end to the outer end, and a water resistance arrangement, that allows the passage of gas therethrough but prevents or substantially prevents the passage of water through the filter arrangement, wherein the filter arrangement comprises a filter housing and a filter element (8, 20, 23, 25, 27, 29, 35, 45, 47, 49,52, 81) which is removable from the filter housing;
the filter housing has an inner surface (19);
the filter element has an outer surface (18);
in use, the filter element is positioned within the filter housing so that there is a close fit between the inner surface of the filter housing and the outer surface of the filter element; and
the flow path comprises a channel (22, 24, 26, 28, 30,41) formed in the inner surface of the filter housing or in the outer surface of the filter element.

12. A kit comprising a filter arrangement according to claim 11, and one or more further filter elements which are interchangeable with the filter element, the or each further filter element having a flow path having a different resistance to air passing therethrough to that of the filter element, and preferably wherein the or each further filter element has a flow path which has a different minimum cross-sectional area than that of the flow path of the filter element.

13. A method of forming a pressure sensing system, comprising the steps of:
providing a housing (2) defining an internal space which is in fluid communication with a pressure sensor (5) so that the pressure of gas within the internal space can be sensed by the pressure sensor;
providing a passage (17) comprising or leading to an exit port;
introducing a quantity of a liquid into the passage;
allowing or causing the liquid to set or cure so that the liquid forms a solid filter which completely or substantially completely fills the cross-section of the passage, wherein the filter has an inner end and an outer end, and is gas-permeable, allowing the flow of gas from the inner end to the outer end, but does not allow the passage of water therethrough and providing a filter housing and a filter element (8, 20, 23, 25, 27, 29, 35,45,47,49,52,81) wherein the filter element fits within the filter housing;
the filter element has an inner surface (19);
the filter element has an outer surface (18);
in use, the filter element is positioned within the filter housing so that there is a close fit between the inner surface of the filter housing and the outer surface of the filter element; and
the flow path comprises a channel (22, 24, 26, 28, 30,41) formed in the inner surface of the filter housing or in the outer surface of the filter element.

## Patentansprüche

1. Fahrzeugdruckerfassungssystem, umfassend:
einen Drucksensor (5);
ein Gehäuse (2), das einen Innenraum definiert, der in Fluidkommunikation mit dem Drucksensor steht, sodass der Druck von Gas innerhalb des Innenraums vom Drucksensor erfasst werden kann;
eine erste Anschlussanordnung (15), die den Anschluss des Sensors an ein im Wesentlichen eingeschlossenes und komprimierbares Erfassungselement erlaubt, sodass Druckschwankungen im Erfassungselement an den Innenraum kommuniziert werden; und
eine Entlüftungsanordnung, die Gaskommunikation zwischen dem Innenraum und der umgebenden Atmosphäre erlaubt,
worin die Entlüftungsanordnung Folgendes umfasst:
einen Durchgang (17), der eine Austrittsöffnung (16) umfasst oder zu dieser führt;
eine Filteranordnung (8), die ein inneres Ende und ein äußeres Ende aufweist und innerhalb des Durchgangs positioniert ist, sodass sie den Durchgang teilweise verdeckt, wobei die Filteranordnung mindestens einen darin gebildeten Flussweg aufweist, der vom inneren Ende zum äußeren Ende verläuft, den Durchgang von Wasser durch die Filteranordnung und ein Filtergehäuse und ein Filterelement (8, 20, 23, 25, 27, 29, 35, 45, 47, 49, 52, 81) aber verhindert oder im Wesentlichen verhindert, worin das Filterelement in das Filtergehäuse passt, worin:
das Filterelement eine Innenfläche (19) aufweist;
das Filterelement eine Außenfläche (18) aufweist;
bei Gebrauch das Filterelement innerhalb des Filtergehäuses positioniert ist, sodass eine enge Passung zwischen der Innenfläche des Filtergehäuses und der Außenfläche des Filterelements besteht; und
der Flussweg einen Kanal (22, 24, 26, 28, 30, 41) umfasst, der in der Innenfläche des Filtergehäuses oder in der Außenfläche des Filterelements gebildet ist.

2. Druckerfassungssystem nach Anspruch 1, worin die Filteranordnung eine Wasserwiderstandsanordnung umfasst, die innerhalb des Durchgangs positioniert ist, die den Durchgang von Gas erlaubt, den Durchgang von Wasser durch die Filteranordnung aber verhindert oder im Wesentlichen verhindert.

3. Druckerfassungssystem nach Anspruch 2, worin die Wasserwiderstandsanordnung eine Menge eines wasserabweisenden und gaspermeablen Materials umfasst.

4. Druckerfassungssystem nach Anspruch 3, worin die Menge des wasserabweisenden und gaspermeablen Materials innerhalb des Filterelements bereitgestellt ist oder worin die Menge des wasserabweisenden und gaspermeablen Materials dem Filterelement vorgeschaltet oder nachgeschaltet bereitgestellt ist.

5. Druckerfassungssystem nach Anspruch 2, worin die Wasserwiderstandsanordnung eine in einem Zwischenabschnitt des Filterelements gebildete Ablassöffnung umfasst.

6. Druckerfassungssystem nach Anspruch 2, worin die Wasserwiderstandsanordnung zwei gegenüberliegende Oberflächen umfasst, worin der Flussweg zwischen den Oberflächen verläuft und worin mindestens eine der gegenüberliegenden Oberflächen eine mikrostrukturierte Oberfläche umfasst.

7. Druckerfassungssystem nach Anspruch 1 oder 2, worin das Filtergehäuse im Durchgang fixiert ist und das Filterelement aus dem Filtergehäuse herausnehmbar ist.

8. Druckerfassungssystem nach einem vorhergehenden Anspruch, worin der Flussweg zwei oder mehr Abschnitte mit verschiedenen Querschnittsoberflächen umfasst.

9. Druckerfassungssystem nach Anspruch 1, worin die Filteranordnung einen Block aus einem gaspermeablen Material umfasst, das nicht den Durchgang von Wasser erlaubt.

10. Fahrzeug umfassend ein Druckerfassungssystem nach einem vorhergehenden Anspruch und ein im Wesentlichen eingeschlossenes und komprimierbares Erfassungselement, das an der ersten Anschlussanordnung davon befestigt ist.

11. Filteranordnung (8) zur Verwendung beim Entlüften von Gas aus einem Druckerfassungssystem in einem Fahrzeug, wobei die Filteranordnung ein inneres Ende und ein äußeres Ende und mindestens einen darin gebildeten Flussweg, der vom inneren Ende zum äußeren Ende verläuft, und eine Wasserwiderstandsanordnung, die den Durchgang von Gas erlaubt, den Durchgang von Wasser durch die Filteranordnung aber verhindert oder im Wesentlichen verhindert, aufweist, worin die Filteranordnung ein Filtergehäuse und ein Filterelement (8, 20, 23, 25, 27, 29, 35, 45, 47, 49, 52, 81), das aus dem Filtergehäuse herausnehmbar ist, umfasst; worin:
das Filtergehäuse eine Innenoberfläche (19) aufweist;
das Filterelement eine Außenoberfläche (18) aufweist;
bei Gebrauch das Filterelement innerhalb des Filtergehäuses positioniert ist, sodass eine enge Passung zwischen der Innenfläche des Filtergehäuses und der Außenfläche des Filterelements besteht; und
der Flussweg einen Kanal (22, 24, 26, 28, 30, 41) umfasst, der in der Innenfläche des Filtergehäuses oder in der Außenfläche des Filterelements gebildet ist.

12. Kit umfassend eine Filteranordnung nach Anspruch 11 und ein oder mehrere weitere Filterelemente, die gegen das Filterelement austauschbar sind, wobei das oder jedes weitere Filterelement einen Flussweg mit einem anderen Widerstand gegen hindurchgehende Luft als denjenigen des Filterelements aufweist, und vorzugsweise, worin das oder jedes weitere Filterelement einen Flussweg aufweist, der eine andere Mindestquerschnittsoberfläche als diejenige des Flusswegs des Filterelements aufweist.

13. Verfahren zum Herstellen eines Druckerfassungssystems, umfassend die folgenden Schritte:
Bereitstellen eines Gehäuses (2), das einen Innenraum definiert, der in Fluidkommunikation mit einem Drucksensor (5) steht, sodass der Druck von Gas innerhalb des Innenraums vom Drucksensor erfasst werden kann;
Bereitstellen eines Durchgangs (17), der eine Austrittsöffnung umfasst oder zu dieser führt;
Einbringen einer Menge einer Flüssigkeit in den Durchgang;
Zulassen oder Bewirken dessen, dass die Flüssigkeit erstarrt oder aushärtet, sodass die Flüssigkeit einen festen Filter bildet, der den Querschnitt des Durchgangs vollständig oder im Wesentlichen vollständig füllt, worin der Filter ein inneres Ende und ein äußeres Ende aufweist und gaspermeabel ist, wodurch der Fluss von Gas vom inneren Ende zum äußeren Ende erlaubt wird, aber nicht der Durchgang von Wasser erlaubt wird, und Bereitstellen eines Filtergehäuses und eines Filterelements (8, 20, 23, 25, 27, 29, 35, 45, 47, 49, 52, 81), worin das Filterelement in das Filtergehäuse passt; worin:
das Filterelement eine Innenfläche (19) aufweist;
das Filterelement eine Außenfläche (18) aufweist;
bei Gebrauch das Filterelement innerhalb des Filtergehäuses positioniert ist, sodass eine enge Passung zwischen der Innenfläche des Filtergehäuses und der Außenfläche des Filterelements besteht; und
der Flussweg einen Kanal (22, 24, 26, 28, 30, 41) umfasst, der in der Innenfläche des Filtergehäuses oder in der Außenfläche des Filterelements gebildet ist.

## Revendications

1. Un système de détection de pression pour véhicule, comprenant :
un capteur de pression (5) ;
un logement (2) définissant un espace interne qui est en communication fluidique avec le capteur de pression de telle sorte que la pression de gaz dans l'espace interne peut être détectée par le capteur de pression ;
un premier agencement de raccordement (15), permettant un raccordement du capteur à un élément de détection sensiblement fermé et compressible, de telle sorte que les variations de pression dans l'élément de détection sont communiquées à l'espace interne ; et
un agencement d'évacuation, permettant la communication du gaz entre l'espace interne et l'atmosphère ambiante,
dans lequel l'agencement d'évacuation comprend :
un passage (17) comprenant ou menant à un orifice de sortie (16) ;
un agencement de filtre (8) ayant une extrémité intérieure et une extrémité extérieure et étant positionné dans le passage de telle sorte qu'il obstrue partiellement le passage, l'agencement de filtre ayant un ou plusieurs trajets d'écoulement formés dans celui-ci passant de l'extrémité intérieure à l'extrémité extérieure mais empêchant ou empêchant sensiblement le passage de l'eau à travers l'agencement de filtre et un logement de filtre et un élément filtrant (8, 20, 23, 25, 27, 29, 35, 45, 47, 49, 52, 81) dans lequel l'élément filtrant s'ajuste dans le logement de filtre dans lequel le logement de filtre ;
l'élément filtrant a une surface intérieure (19) ;
l'élément filtrant a une surface extérieure (18) ;
lors de l'utilisation, l'élément filtrant est positionné dans le logement de filtre de telle sorte qu'il y a un ajustage serré entre la surface intérieure du logement de filtre et la surface extérieure de l'élément filtrant ; et
le trajet d'écoulement comprend un canal (22, 24, 26, 28, 30, 41) formé dans la surface intérieure du logement de filtre ou dans la surface extérieure de l'élément filtrant.

2. Un système de détection de pression selon la revendication 1, dans lequel l'agencement de filtre comprend un agencement de résistance à l'eau, positionné dans le passage, qui permet le passage de gaz à travers celui-ci mais empêche ou empêche sensiblement le passage de l'eau à travers l'agencement de filtre.

3. Un système de détection de pression selon la revendication 2, dans lequel l'agencement de résistance à l'eau comprend une quantité d'un matériau perméable au gaz et résistant à l'eau.

4. Un système de détection de pression selon la revendication 3, dans lequel la quantité du matériau perméable au gaz et résistant à l'eau est fournie dans l'élément filtrant, ou dans lequel la quantité du matériau perméable au gaz et résistant à l'eau est fournie en amont ou en aval de l'élément filtrant.

5. Un système de détection de pression selon la revendication 2, dans lequel l'agencement de résistance à l'eau comprend une ouverture de drainage formée dans une partie intermédiaire de l'élément filtrant.

6. Un système de détection de pression selon la revendication 2, dans lequel l'agencement de résistance à l'eau comprend deux surfaces opposées, dans lequel le trajet d'écoulement passe entre les surfaces, et dans lequel au moins une des surfaces opposées comprend une surface micro-structurée.

7. Un système de détection de pression selon la revendication 1 ou 2, dans lequel le logement de filtre est fixé dans le passage, et l'élément filtrant peut être retiré du logement de filtre.

8. Un système de détection de pression selon l'une quelconque des revendications précédentes, dans lequel le trajet d'écoulement comprend deux ou plus de deux sections ayant des zones de section transversale différentes.

9. Un système de détection de pression selon la revendication 1, dans lequel l'agencement de filtre comprend un bloc d'un matériau perméable au gaz qui ne permet pas le passage de l'eau à travers celui-ci.

10. Un véhicule comprenant un système de détection de pression selon l'une quelconque des revendications précédentes, et un élément de détection sensiblement fermé et compressible assujetti au premier agencement de raccordement de celui-ci.

11. Un agencement de filtre (8) destiné à être utilisé dans l'évacuation de gaz d'un système de détection de pression dans un véhicule, l'agencement de filtre ayant une extrémité intérieure et une extrémité extérieure et un ou plusieurs trajets d'écoulement formés dans celui-ci allant de l'extrémité intérieure à l'extrémité extérieure, et un agencement de résistance à l'eau, qui permet le passage de gaz à travers celui-ci mais empêche ou empêche sensiblement le passage de l'eau à travers l'agencement de filtre, dans lequel l'agencement de filtre comprend un logement de filtre et un élément filtrant (8, 20, 23, 25, 27, 29, 35, 45, 47, 49, 52, 81) qui peut être retiré du logement de filtre ;
le logement de filtre a une surface intérieure (19) ;
l'élément filtrant a une surface extérieure (18) ;
lors de l'utilisation, l'élément filtrant est positionné dans le logement de filtre de telle sorte qu'il y a un ajustage serré entre la surface intérieure du logement de filtre et la surface extérieure de l'élément filtrant ; et
le trajet d'écoulement comprend un canal (22, 24, 26, 28, 30, 41) formé dans la surface intérieure du logement de filtre ou dans la surface extérieure de l'élément filtrant.

12. Un kit comprenant un agencement de filtre selon la revendication 11, et un ou plusieurs autres élément filtrants qui sont interchangeables avec l'élément filtrant, le ou chacun des autres éléments filtrants ayant un trajet d'écoulement ayant une résistance à l'air passant à travers celui-ci différente de celle de l'élément filtrant, et de préférence dans lequel le ou chacun des autres éléments filtrants a un trajet d'écoulement qui a une zone de section transversale minimale différente de celle du trajet d'écoulement de l'élément filtrant.

13. Un procédé destiné à former un système de détection de pression, comprenant les étapes consistant à :
fournir un logement (2) définissant un espace interne qui est en communication fluidique avec un capteur de pression (5) de telle sorte que la pression de gaz dans l'espace interne peut être détectée par le capteur de pression ;
fournir un passage (17) comprenant ou menant à un orifice de sortie ;
introduire une quantité d'un liquide dans le passage ;
permettre ou provoquer que le liquide prenne ou durcisse de telle sorte que le liquide forme un filtre solide qui remplit complètement ou remplit complètement sensiblement la section transversale du passage, dans lequel le filtre a une extrémité intérieure et une extrémité extérieure, et est perméable au gaz, ce qui permet l'écoulement de gaz de l'extrémité intérieure à l'extrémité extérieure, mais ne permet pas le passage de l'eau à travers celui-ci et
fournir un logement de filtre et un élément filtrant (8, 20, 23, 25, 27, 29, 35, 45, 47, 49, 52, 81) dans lequel l'élément filtrant s'ajuste dans le logement de filtre ;
l'élément filtrant a une surface intérieure (19) ;
l'élément filtrant a une surface extérieure (18) ;
lors de l'utilisation, l'élément filtrant est positionné dans le logement de filtre de telle sorte qu'il y a un ajustage serré entre la surface intérieure du logement de filtre et la surface extérieure de l'élément filtrant ; et
le trajet d'écoulement comprend un canal (22, 24, 26, 28, 30,41) formé dans la surface intérieure du logement de filtre ou dans la surface extérieure de l'élément filtrant.
